# EUROPÄISCHE PATENTANMELDUNG

(11) **EP 0 937 663 A1**
(43) Veröffentlichungstag der Anmeldung: **25.08.1999**
(21) Anmeldenummer: 99102547.9
(22) Anmeldetag: 10.02.1999
(51) Int. Cl.: B65G 21/20, B65G 17/48

(54) **Abstützvorrichtung**

(30) Priorität: 19.02.1998 DE 29802927 U
(71) Anmelder: JOH. WINKLHOFER & SÖHNE GmbH & Co KG, D-81369 München (DE)
(72) Erfinder: Grabmann,Peter, 86570 Sainsbach (DE); Heinrich,Dag, 82377 Penzberg (DE)
(74) Vertreter: Grünecker, Kinkeldey, Stockmair & Schwanhäusser Anwaltssozietät

(57) **Zusammenfassung**

Die Erfindung bezieht sich auf eine Abstützvorrichtung (25,26) zum Aufbringen einer Seitenführungskraft bei Seitenbogengelenkketten (6), die eine Seitenbogengelenkkette (6) und ein mit der Seitenbogengelenkkette (6) mitlaufendes, diese auf der Innenseite des Kettenbogen (19) seitlich abstützendes Abstützelement (25,26) umfaßt. Um eine Abstützvorrichtung (25,26) der eingangs genannten Art bereitzustellen, die einen weitaus geringeren Konstruktionsaufwand erfordert und wesentlich kostengünstiger herstellbar ist und darüber hinaus platzsparend anbringbar ist, ist vorgesehen, daß das Abstützelement (25,26) von einem endlos, mittels Umlenkeinrichtungen (43,44) geführten und von Führungseinrichtungen (23,24) abgestützten Zugmittel (25,26) gebildet ist.

## Beschreibung

Die vorliegende Erfindung bezieht sich auf eine Abstützvorrichtung zum Aufbringen einer Seitenführungskraft bei Seitenbogengelenkketten, die eine Seitenbogengelenkkette und ein mit der Seitenbogengelenkkette mitlaufendes, diese auf der Innenseite des Kettenbogens seitlich abstützendes Abstützelement umfaßt.

Eine bekannte Seitenbogengelenkkette ist z.B. aus dem deutschen Gebrauchsmuster G 297 05 311 bekannt. Genauer gesagt, handelt es sich bei der in dieser Druckschrift beschriebenen Gelenkkette um eine Stauförderkette, die neben der üblichen Schwenkbewegung der einzelnen Kettenglieder um die Gelenkbolzenachse auch eine Kippbewegung bezüglich der Gelenkbolzenachse zuläßt. Hierdurch können derartige Ketten auch im Seitenbogen geführt werden. Das bedeutet, daß diese Stauförderkette z.B. in einer Ebene bogenförmig verlaufen kann, die im wesentlichen parallel zu den Gelenkbolzenachsen ausgerichtet ist. In den meisten Fällen werden zwei parallel nebeneinander angeordnete Stauförderkettenstränge als Förderbahn verwendet. Hierbei werden die Stauförderketten jeweils in einem Schienensystem geführt.

Problematisch wird das Fördern mit einer solchen Förderbahn dann, wenn die Stauförderkette einen Seitenbogen ausführt. Der Grund liegt darin, daß eine Seitenführungskraft aufgebracht werden muß, da die Kette aufgrund der sich stetig ändernden Zugrichtung von Kettenglied zu Kettenglied bestrebt ist, sich zur Innenseite des Kettenbogens hin zu verschieben. Aus diesen Gründen ist eine seitliche Führung im Kettenbogenbereich erforderlich. Aufgrund der relativ hohen Kräfte kommen auch keine Gleitführungen zum Einsatz. Bislang wurde bei derartigen Förderbahnen im Bereich eines Förderbogens die innen laufende Seitenbogenkette kürzer ausgeführt, so daß sie vor dem Bogen endete. Ein relativ großer und klobiger Drehteller übernahm dann die Funktion der inneren Seitenbogenkette. Der Rand des Drehtellers stützt die äußere Seitenbogenkette seitlich ab. Die Relativgeschwindigkeit zwischen der äußeren Seitenbogenkette und dem Drehteller ist gleich null, so daß keine Reibung auftritt. Die Oberfläche des Drehtellers muß entsprechend glatt sein, damit bei einem Stau der Teller unter den Gütern entlanggleiten kann. Deshalb sind die Drehteller meistens aus Stein gefertigt oder mit einer reibungsarmen Oberfläche, z.B. aus Teflon versehen. Ein weiterer Nachteil dieser Vorrichtung besteht darin, daß nicht nur der fördernde Oberzug der Seitenbogenkette, sondern auch der rücklaufende Unterzug im Bereich des Bogens abgestützt werden muß. Da der Unterzug jedoch eine entgegengesetzte Laufrichtung aufweist, kann dieser nicht von dem selben Drehteller abgestützt werden. Hierzu wird ein separater, entgegengesetzt drehender Teller benötigt.

Der Erfindung liegt nunmehr die Aufgabe zugrunde, eine Abstützvorrichtung der eingangs genannten Art bereitzustellen, die einen weitaus geringeren Konstruktionsaufwand erfordert und wesentlich kostengünstiger herstellbar ist. Darüber hinaus soll die Abstützvorrichtung platzsparend anbringbar sein.

Diese Aufgabe wird erfindungsgemäß dadurch gelöst, daß das Abstützelement von einem endlosen, mittels Umlenkeinrichtungen geführten und von Führungseinrichtungen abgestützten Zugmittel gebildet ist. Als Zugmittel im Sinne der Erfindung sind sämtliche band- bzw. kettenförmig umlaufende Endloselemente, wie z.B. Förderbänder, Riemen und Ketten zu verstehen, so lange sie in der Lage sind, bei entsprechender Abstützung durch die Führungseinrichtungen eine ausreichende Seitenführungskraft auf die Seitenbogengelenkkette aufzubringen bzw. von dieser aufzunehmen. Der Vorteil einer solchen Konstruktion besteht darin, daß trotz kompakter Bauweise weiterhin eine mitlaufende Abstützung im Kettenbogenbereich erfolgen kann. Da es sich um ein endloses Zugmittel handelt, läuft dieses ebenfalls, ähnlich der Seitenbogengelenkkette um und benötigt lediglich eine Breite, die für eine entsprechend geeignete Umlenkung und Rückführung des nicht abstützenden Leerstrangs erforderlich ist. Die Verwendung eines großen, raumeinnehmenden Drehtellers kann entfallen. Hierdurch läßt sich eine derartig abgestützte Seitenbogengelenkkette auch um Ein- und Aufbauten in Werkhallen, z.B. eine Säule, eng herumführen. Das erfindungsgemäße Abstützelement baut so schmal, daß selbst bei einer aus mindestens zwei parallel zueinander angeordneten Seitenbogenketten bestehenden Förderbahn eine Unterbrechung der im Kettenbogen innenliegenden Seitenbogenkette nicht erforderlich ist. Der Raum zwischen den beiden Seitenbogenketten ist in aller Regel ausreichend für die Rückführung des nicht abstützenden Leerzuges des Zugmittels. In den meisten Fällen braucht das Zugmittel nicht separat angetrieben zu werden, da die Kraft, mit der die Seitenbogengelenkkette auf das Zugmittel ausübt, zum Antreiben des Zugmittels ausreicht.

Bei einer weiteren Ausführungsform wird als Zugmittel eine Laschenkette verwendet. Da derartige Laschenketten meistens aus Stahl gefertigt sind, können hohe Seitenführungskräfte aufgenommen werden. Die Umlenkung einer Laschenkette wird in einfacher Weise mittels eines Kettenrades vorgenommen. Kettenräder können auch als Führungseinrichtungen verwendet werden.

Günstigerweise kann vorgesehen sein, daß die Laschenkette an Gelenkstellen miteinander verbundene Kettenglieder umfaßt, daß jede Gelenkstelle einen Gelenkbolzen und eine Gelenkhülse umfaßt, daß im Querschnitt im wesentlichen U-förmige Abstützbügel an den Kettengliedern angebracht sind, deren U-Schenkel mit den Gelenkbolzen verbunden sind und deren U-Steg eine Abstützfläche zum Abstützen der Seitenbogengelenkkette aufweist. Hierbei handelt es sich um eine konstruktiv einfache Ausführung, mit der eine geeignete Abstützfläche zum Aufnehmen der Seitenführungskraft an eine herkömmliche Laschenkette angeordnet werden kann.

Um möglichst keine Beschädigung der Abstützflache sowie der sich abstützenden Teile der Seitenbogengelenkkette zu verursachen, kann auf der Abstützfläche der Laschenkette ein dämpfender Belag aufgebracht sein. Hierzu eignen sich insbesondere aufvulkanisierte Elastomere, die die entsprechende Funktion übernehmen.

Um eine möglichst gleichmäßige Abstützwirkung zu erzielen, ist gemäß einer weiteren Variante vorgesehen, daß die Seitenbogengelenkkette an Gelenkstellen miteinander verbundene Kettenglieder umfaßt, daß jede Gelenkstelle einen Gelenkbolzen und eine Gelenkhülse umfaßt, und daß die Seitenbogengelenkkette und die Laschenkette so zueinander angeordnet sind, daß zumindest eine für ein ausreichendes Abstützen erforderlicher Anzahl an Gelenkbolzen der Seitenbogengelenkkette auf der Abstützfläche der Abstützbügel der Laschenkette aufsitzt. Die gewünschte Anzahl ergibt sich aus den zu erwartenden Seitenführungskräften und ist von einem Konstrukteur leicht zu bestimmen.

Bevorzugt kann jedoch vorgesehen sein, daß jeder der Gelenkbolzen der Seitenbogengelenkkette auf eine Abstützfläche eines Abstützbügels der Laschenkette aufsitzt. Hierzu kann der Abstand der Gelenkbolzen der Seitenbogengelenkkette und der Abstand der Gelenkbolzen der Laschenkette gleich groß sein. Es wird demnach jeder Gelenkbolzen abgestützt, so daß keine unerwünschten Kräfte in nicht abgestützten Gelenkstellen auftreten können.

Damit auf einfache Konstruktionen von Laschenketten zurückgegriffen werden kann, sind gemäß einer Ausführungsform die Gelenkbolzenachsen der Seitenbogengelenkkette quer zu den Gelenkbolzenachsen der abstützenden Laschenkette ausgerichtet. Die Laschenkette ist weniger empfindlich in Bezug auf derartig ausgerichtete Kräfte.

Eine besonders günstige Anordnung sieht vor, daß die Gelenkbolzenachsen der Seitenbogengelenkkette im wesentlichen senkrecht zu den Gelenkbolzenachsen der abstützenden Laschenkette ausgerichtet sind. Hierdurch wird verhindert, daß unerwünschte Kippkräfte auf die Laschenkette übertragen werden, die zu einer Torsionsbelastung führen wurden. Hierdurch entstehen auch keine zusätzlichen Querkräfte an den sich berührenden Oberflächen, da diese senkrecht aufeinandertreffen.

Des weiteren kann vorgesehen sein, daß die U-Schenkel des Abstützbügels im wesentlichen senkrecht zur Gelenkbolzenachse der Laschenkette angeordnet sind und jeweils die U-Schenkel eines Abstützbügels an zwei benachbarten Gelenkbolzen befestigt sind, daß der U-Steg jedes Abstützbügels mit der Abstützfläche im wesentlichen parallel zu den Gelenkbolzenachsen angeordnet ist und daß die Gelenkbolzen der Seitenbogenkette sich mit ihrer auf der Innenseite des Kettenbogens angeordneten Stirnseite auf der Abstützfläche abstützen. Die von jedem Gelenkbolzen der Seitenbogengelenkkette ausgeübte Kraft wird demnach von zwei Gelenkbolzen aufgenommen. Genau genommen handelt es sich um jeweils vier Abstützpunkte an denen der Abstützbügel abgestützt wird, um die entsprechende Kraft aufzunehmen. Hierdurch erfolgt eine gleichmäßige Lastverteilung mit entsprechend verringerter Belastung einer Laschenkette.

Eine weitere günstige Ausgestaltung sieht vor, daß die abstützende Laschenkette auf ihren Gelenkhülsen drehbar angeordnete Laufrollen aufweist, daß als Führungseinrichtung eine dem Kettenbogen angepaßte Führungsschiene mit einer Führungsfläche vorgesehen ist, und daß die Laschenkette und die Führungsschiene derart angeordnet sind, daß die Laufrollen sich auf der Führungsfläche abstützen und auf dieser entlang rollbar sind. Die Führungseinrichtung besteht demnach aus einer einfachen Schiene mit einer Lauffläche für die Laufrollen einer Rollenkette. Diese rollen sich dann wie die Wälzkörper eines Lagers auf der Führungsschiene reibungsarm ab.

Am einfachsten auszuführen ist eine derartige Abstützung, wenn gemäß einer Variante die Führungsfläche parallel zu den Gelenkbolzenachsen der Laschenkette ausgerichtet ist und eine Breite aufweist, die kleiner ist als der kleinste Abstand von zwei parallel aneinander gegenüberliegenden Laschen der Laschenkette. Die Laschen der Laschenkette bilden somit die seitliche Begrenzung und sorgen dafür, daß die Laschenkette auf der Führungsschiene verbleibt.

Bevorzugterweise kann die Seitenbogengelenkkette eine Stauförderkette sein, die in einem Führungsschienenaufbau geführt ist und die auf Führungsflächen des Führungsschienenaufbaus abrollende Laufrollen umfaßt. Die Führungsflächen können z.B. von separaten, verschleißarmen Elementen gebildet sein, um die Reibverhältnisse zu minimieren. Des weiteren hat der Erfinder herausgefunden, daß bislang verwendete Führungsschienenaufbauten in eine entsprechende Bogenform gebracht werden können und nur minimaler Modifizierung bedürfen, um eine entsprechende Abstützung bereitzustellen.

In dem Führungsschienenaufbau sind der fördernde Oberzug und der rücklaufende Unterzug der Seitenbogengelenkkette angeordnet wobei dem Oberzug ein erstes Abstützelement und dem Unterzug ein zweites Abstützelement zugeordnet ist. Da der Unterzug in die entgegengesetzte Richtung des Oberzuges läuft, ist eine separate Abstützung durch das zweite Abstützelement empfehlenswert. Auch hier wird mit minimalem Bauraum die vorteilhafte Abstützwirkung erreicht.

Darüber hinaus können Führungselemente vorgesehen sein, die den rücklaufenden Leerzug des Abstützelementes in zumindest eine angenäherte Bogenform drücken, so daß die Breite des Abstützelementes gering ist. Derartige Führungselemente können verschieden ausfallen. Da der rücklaufende Leerzug nicht mit einer Seitenführungskraft beaufschlagt ist, kann eine Führung durch einfache Gleitschienen erfolgen. Dies ist insbesondere dann von Vorteil, wenn Laschenketten mit Abstützbügel verwendet werden. Aber auch Laufrollen oder ähnliche Abstützelemente können Anwendung finden.

Des weiteren bezieht sich die Erfindung auf eine Förderbahn mit mindestens zwei parallel zueinander angeordneten Seitenbogenketten, die zumindest einen Förderbogen aufweist, und mit einer im Bereich des Förderbogens jeweils einer Seitenbogengelenkkette zugeordneten und diese umfassenden Abstützvorrichtung nach einem der vorangegangenen Ansprüche. Eine solche Förderbahn ist nicht, wie im Stand der Technik auf einen Drehteller im Bereich des Förderbogens angewiesen, obwohl weiterhin eine verschleißarme Abstützung der Seitenführungskräfte erfolgt. Diese Vorteile sind insbesondere dadurch weiterhin gegeben, weil keine Relativbewegung zwischen dem Zugmittel und der Seitenbogengelenkkette im Bereich der Abstützung stattfindet. Des weiteren behalten derartige Förderbahnen auch im Kurvenbereich ihre jeweiligen Förderwirkungen bei. Dies macht sich insbesondere bei Stauförderketten mit der gewünschten Staufunktion bemerkbar.

Im folgenden wird ein Ausführungsbeispiel der vorliegenden Erfindung anhand einer Zeichnung näher erläutert. Es zeigen:
- Fig. 1: einen Querschnitt durch eine Abstützvorrichtung, wobei der Leerzug des Abstützelementes zur Vereinfachung weggelassen worden ist,
- Fig. 2: die Führungsschiene aus Figur 1 im Querschnitt zum Abstützen und Führen des Abstützelementes,
- Fig. 3: eine Querschnittsansicht durch den Führungsschienenaufbau eines Förderbogens für eine Förderbahn und
- Fig. 4: eine schematische Darstellung eines Förderbogens einer Förderbahn in der Draufsicht.

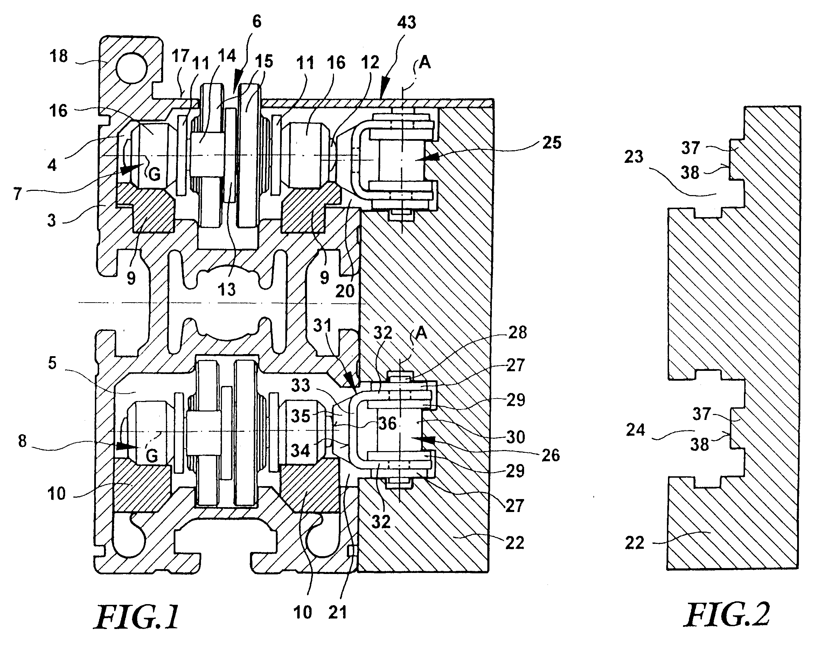

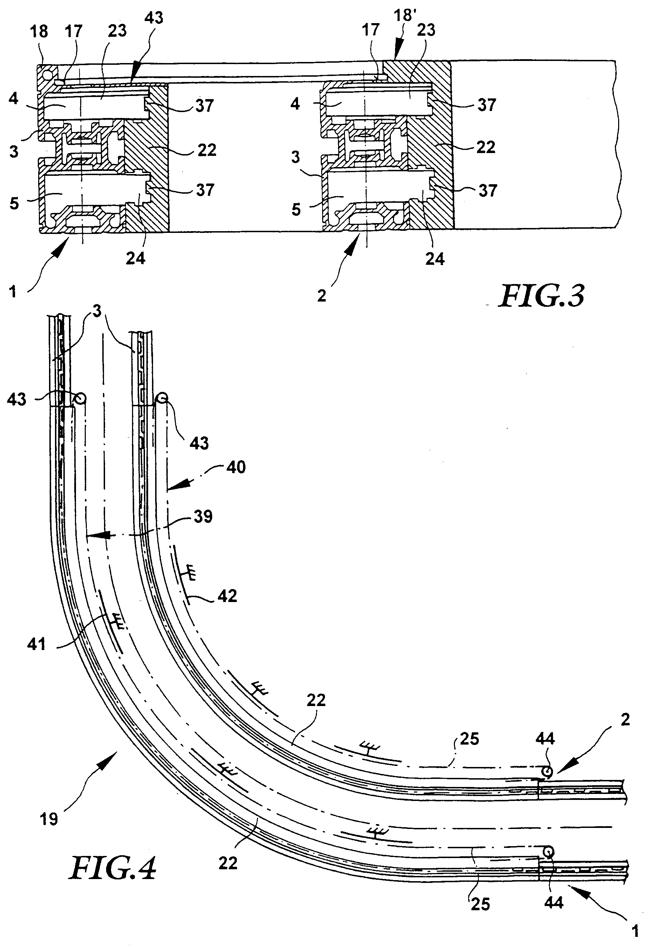

In der Figur 1 ist die äußere Spur 1 der in Figur 4 dargestellten Förderbahn im Querschnitt dargestellt, wobei die Förderbahn auch eine innere Spur 2 (Figur 4) aufweist.

Die äußere Spur 1 umfaßt im wesentlichen einen Schienenaufbau 3 aus einem Aluminiumstrangpreßprofil. In diesem Schienenaufbau 3 ist ein oberer Kanal 4 und ein unterer Kanal 5 angeordnet, in denen eine als Seitenbogengelenkkette ausgebildete Stauförderkette 6 angeordnet ist. In dem oberen Kanal 4 ist der fördernde Oberzug 7 und in dem Kanal 5 der rücklaufende Unterzug 8 ein und derselben Stauförderkette 6 angeordnet. In den Kanälen befinden sich eingelegte Schienenprofilstränge 9 bzw. 10 aus verschleißfestem Material, z.B. Stahl, auf denen die Stauförderkette 6 abrollt. Die Stauförderkette 6 besteht aus an Gelenkstellen miteinander verbundenen Außenkettengliedern mit den Außenlaschen 11 und den Gelenkbolzen 12 und Innenkettengliedern mit der Innenlasche 13 und der Gelenkhülse 14. Jedes Außenkettenglied weist zwei Gelenkbolzen 12 auf, die sich jeweils durch eine Gelenkhülse 14 eines benachbarten Innenkettengliedes erstrecken. Jedes Innenkettenglied weist zwei Gelenkhülsen 14 auf. Auf jeder Gelenkhülse 14 sitzt eine drehbar gelagerte Stauförderrolle 15 auf. Die Stauförderrollen 15 eines Innenkettengliedes befinden sich jeweils auf der anderen Seite der Innenlasche 13, so daß sie versetzt zueinander angeordnet sind. Die Stauförderrollen 15 bestehen bevorzugt aus Kunststoff und sind leicht drehbar auf den Gelenkhülsen 14 angebracht. Die Gelenkbolzen 12 stehen seitlich über die Außenlaschen 11 über. Auf ihren Endbereichen sind Laufrollen 16 drehbar angeordnet, die auf den Schienenprofilsträngen 9 bzw. 10 aufsitzen und auf diesen abrollen. Demnach befindet sich jeweils eine Laufrolle 16 an einem Endbereich des Gelenkbolzens 12. Die Stauförderrollen 15 sind dabei so innerhalb der Kanäle 4 und 5 angeordnet, daß sie frei drehbar sind. Die äußere Spur 1 des Schienenaufbaus 3 weist eine über ihre Förderseite 17 überstehende Randanschlagschiene 18 auf. Diese Schiene 18 verhindert, daß auf der Förderbahn geförderte Güter nicht seitlich herunterfallen können. Des weiteren weist der Schienenaufbau 3 an seiner Förderseite eine Längsöffnung auf, durch die sich die Stauförderrollen 15 erstrecken, so daß sie um einen bestimmten Betrag über die Förderseite 17 überstehen. Der Überstand muß gerade so groß sein, daß die zu fördernden Gegenstände nicht mit der Förderseite 17 in Berührung kommen, sondern auf den Stauförderrollen 15 aufsitzen. Die Gelenkbolzenachse G ist dabei im wesentlichen parallel zur Förderseite 17 angeordnet.

Die Stauförderkette 6 wird mittels geeigneter Antriebselemente, z.B. Kettenräder, die in die Zwischenräume zwischen die Laufrollen 16 eingreifen angetrieben. Der Oberzug 7 im oberen Kanal 4 bewegt sich z. B. aus der Ebene der Figur 1 hinaus auf den Betrachter zu. Am Ende der Förderbahn wird die Stauförderkette 6 umgelenkt und der Unterzug 8 wird in dem unteren Kanal 5 zurückgeführt, so daß er sich aus der Bildebene von dem Betrachter wegbewegt.

Bei dem in Figur 4 dargestellten Förderbogens 19, der im vorliegenden Fall als 90°-Kreisbogen ausgebildet ist, jedoch auch hiervon abweichende Formen, insbesondere andere Winkelbögen, aufweisen kann, weist der Schienenaufbau 3 im Bereich des oberen Kanals 4 und unteren Kanals 5 jeweils einen seitlichen Durchbruch 20, 21 an seiner Innenseite auf. Hieran angrenzend ist eine Abstützschiene 22 (siehe auch Figur 2) angeordnet. Die Abstützschiene 22 ist an die Krümmung des Schienenaufbaus 3 angepaßt und liegt über den gesamten Bogen an der Innenseite an. Auf der Höhe der Durchbrüche 21 sind in der Abstützschiene 22 Führungskanäle 23 bzw. 24 eingearbeitet. Diese Führungskanäle 23 bzw. 24 erstrecken sich in Längsrichtung der Abstützschiene 22 parallel zu den jeweils zugeordneten Kanälen 4 und 5 des Schienenaufbaus 3, die sich ebenfalls längs durch den Schienenaufbau 3 erstrecken.

In den Führungskanälen 23 und 24 ist eine Laschenkette in Form einer U-Bügelkette 25 bzw. 26 angeordnet. Es handelt sich bei den U-Bügelketten 25 und 26 jeweils um separate Gelenkketten, die jedoch im wesentlichen identisch ausgeführt sind, so daß der Aufbau nur anhand der U-Bügelkette 26 erläutert wird. Bei der U-Bügelkette 26 handelt es sich vom Grundaufbau im wesentlichen um eine einfache Laschenkette mit Außenlaschen 27 und diese verbindende Gelenkbolzen 28 und Innenlaschen 29, die mittels nicht näher dargestellten Gelenkhülsen miteinander verbunden sind. Auf diesen nicht dargestellten Gelenkhülsen sind drehbar gelagert Laufrollen 30 angeordnet. Jedes Außenkettenglied weist zwei Außenlaschen 27 und zwei Gelenkbolzen 28 und jedes Innenkettenglied zwei Innenlaschen 29 und zwei diese verbindende Gelenkhülsen sowie Laufrollen 30 auf. Ein Gelenkbolzen 28 des Außenkettengliedes erstreckt sich jeweils durch eine Gelenkhülse des Innenkettengliedes. Zusätzlich weist die Kette 26 im Querschnitt U-förmige Abstützbügel 31 auf, die zwei parallele U-Schenkel 32 und einen sich quer dazu erstreckenden U-Steg 33 aufweisen. Die U-Schenkel 32 erstrecken sich parallel zu den Innenlaschen 29 und Außenlaschen 27 und sind zwischen diesen angeordnet. Jeder U-Schenkel 32 ist an zwei benachbarten Gelenkbolzen 28 befestigt und weist im wesentlichen die gleiche Länge wie ein Kettenglied auf. Demnach sind eben so viele Abstützbügel 31 wie z.B. Außenkettenglieder bzw. Innenkettenglieder vorhanden. Der Abstützbügel 31 weist eine Abstützfläche 34 auf, die senkrecht zur Gelenkbolzenachse G der Stauförderkette 6 ausgerichtet ist. Auf der Abstützfläche 34 befindet sich ein Belag 35 aus einem Elastomermaterial, auf dem sich die Stirnfläche 36 des Gelenkbolzens 12 abstützt. Die U-Bügelkette 25 bzw. 26 stützt sich mit ihrer Laufrolle 30 jeweils auf einer Führungsschiene 37 in dem Führungskanal 23 bzw. 24 ab. Die Führungsschiene 37 weist eine Führungsfläche 38 auf, die im wesentlichen parallel zur Gelenkbolzenachse A der U-Bügelkette 25 bzw. 26 ausgerichtet ist. Die Laufrollen 30 sitzen demnach auf der Führungsfläche 38 auf und rollen auf dieser ab.

Die Gelenkbolzenachse A der U-Bügelkette 25 bzw. 26 ist jeweils senkrecht zur Gelenkbolzenachse G der Stauförderkette 6 angeordnet, so daß die Kraftübertragung durch die Stirnfläche 36 des Gelenkbolzens 12 ebenfalls im wesentlichen senkrecht auf den Belag 35 erfolgt.

In der Figur 1 ist jeweils nur ein einziger Zug der U-Bügelkette 25 oder U-Bügelkette 26 dargestellt. Die Rückführung des nicht dargestellten Leerzugs erfolgt außerhalb der Abstützschiene 22. Die Leerzüge 39 und 40 der oberen U-Bügelketten 25 sind in der Figur 4 eingezeichnet. Diese werden mittels Führungsschienen 41 und 42 entlang der Rückseite der Abstützschiene 22 parallel entlanggeführt, so daß die Gesamtbreite der Abstützvorrichtung relativ gering ist. Anstatt Führungsschienen 41 und 42 können auch jegliche andere Führungseinrichtungen, z.B. Laufrollen oder ähnliches, verwendet werden.

Da sich der Oberzug 7 und der Unterzug 8 der Stauförderkette 6 in unterschiedliche Richtungen bewegen, bewegen sich auch die U-Bügelkette 25 und U-Bügelkette 26 in unterschiedliche Richtungen. Aus diesen Gründen müssen für die Abstützung auch separate Ketten verwendet werden.

Anhand der Figur 3 ist ein Querschnitt durch den Gesamtschienenaufbau einer Führungsbahn mit äußerer Spur 1 und innerer Spur 2 dargestellt. Der Querschnitt der inneren Spur 2 unterscheidet sich nur unwesentlich von dem Querschnitt der äußeren Spur 1. Ein Unterschied besteht darin, daß die Randanschlagschiene 18' der inneren Spur 2 Bestandteil der Abstützschiene 22 ist. Des weiteren erfolgt an der äußeren Spur 1 noch eine Abdeckung mittels eines Abdeckbleches 43, so daß möglichst wenig Schmutz in den Kanal 4 gelangt. Der Abstand der inneren und äußeren Spur 1 und 2 richtet sich nach den zu fördernden Gegenständen. Die Gegenstände müssen eine Breite aufweisen, die geringer ist als der Abstand der Randanschlagschienen 18 und 18', jedoch muß die Breite ausreichend sein, daß die Gegenstände ständig auf den Stauföderrollen 15 der Stauförderketten 6 aufsitzen.

Die Abstützung mittels der U-Bügelketten 25 und 26 erfolgt nur im Bereich des Förderbogens 19, da hier Seitenführungskräfte aufzufangen sind, die durch die Krümmung der Stauförderketten 6 veranlaßt werden.

Im folgenden wird die Wirkungsweise des oben beschriebenen Ausführungsbeispiels näher erläutert. Da die Stauförderkette 6 als sogenannte Seitenbogenkette ausgeführt ist, kann sie auch in einer durch die Gelenkbolzenachse G verlaufende Ebene bogenförmig verlaufen. Hierzu muß die Stauförderkette 6 jedoch geführt werden, da sie aufgrund einfacher mechanischer Gesetze bestrebt ist, ihre gerade Form wieder einzunehmen. Diese Seitenführungskräfte müssen entsprechend aufgefangen werden. Am besten erfolgt dies mittels eines Abstützelementes, welches mit gleicher Geschwindigkeit mit der Stauförderkette 6 mitläuft, so daß keine Relativbewegung zwischen diesen Elementen stattfindet. Bei dem obigen Ausführungsbeispiel wird dieses Abstützelement durch eine U-Bügelkette 25 bzw. 26 gebildet, die mit ihren Laufrollen 30 auf den Führungsschienen 37 reibungsarm abläuft. Die Kraftübertragung erfolgt über die Stirnflächen 36 der Gelenkbolzen 12 über den Elastomerbelag 35 und über die U-Schenkel 36 auf die Gelenkbolzen 28 und über die Laufrollen 30 auf die Führungsfläche 38. Die seitliche Führung der U-Bügelkette 25 bzw. 26 erfolgt dadurch, daß die Führungsschiene 37 eine geringere Breite aufweist als der Abstand der Innenlaschen 29, so daß eine Führungswirkung gegeben ist. Bevorzugt ist der Abstand der einzelnen Kettenglieder der U-Bügelkette 25 und 26 so gewählt, daß auf jedem Abstützbügel 31 ein Gelenkbolzen 12 aufsitzt. Eine entsprechende Zuordnung erfolgt bei der Montage der Einheit. Die U-Bügelketten 25 und 26 müssen auch nicht separat angetrieben werden, da sie aufgrund des Aufdrückens der Gelenkbolzen 12 automatisch mitgenommen werden. Die Umlenkung der U-Bügelketten 25 und 26 erfolgt mittels Kettenräder 43 bzw. 44 am jeweiligen Ende des Förderbogens 19. Im vorliegenden Beispiel umfaßt die gesamte Abstützvorrichtung im Bereich des Förderbogens 19 vier U-Bügelketten 25 bzw. 26.

Eine derartige Abstützung hat den Vorteil, daß der innere Bereich des Förderbogens im wesentlichen frei von Einbauten ist, so daß die Förderbahn auch z.B. um eine Säule oder ähnliches herumgeführt werden kann.

## Patentansprüche

1. Abstützvorrichtung zum Aufbringen einer Seitenführungskraft bei Seitenbogengelenkketten (6), die eine Seitenbogengelenkkette (6) und ein mit der Seitenbogengelenkkette (6) mitlaufendes, diese auf der Innenseite des Kettenbogen seitlich abstützendes Abstützelement (25, 26) umfaßt,
**dadurch gekennzeichnet,**
daß das Abstützelement (25, 26) von einem endlos, mittels Umlenkeinrichtungen (43, 44) geführten und von Führungseinrichtungen (41, 42) abgestützten Zugmittel gebildet ist.

2. Abstützvorrichtung nach Anspruch 1,
**dadurch gekennzeichnet,**
daß das Zugmittel eine Laschenkette (25, 26) ist.

3. Abstützvorrichtung nach Anspruch 1 oder 2,
**dadurch gekennzeichnet,**
daß die Laschenkette (25, 26) an Gelenkstellen miteinander verbundene Kettenglieder umfaßt, daß jede Gelenkstelle einen Gelenkbolzen (28) und eine Gelenkhülse umfaßt, daß im Querschnitt im wesentlichen U-förmige Abstützbügel (31) an den Kettengliedern angebracht sind, deren U-Schenkel (32) mit den Gelenkbolzen (28) verbunden sind und deren U-Steg (33) eine Abstützfläche (34) zum Abstützen der Seitenbogengelenkkette (6) aufweist.

4. Abstützvorrichtung nach einem der vorangegangenen Ansprüche,
**dadurch gekennzeichnet,**
daß auf der Abstützfläche (34) der Laschenkette (25, 26) ein dämpfender Belag (35) aufgebracht ist.

5. Abstützvorrichtung nach einem der vorangegangenen Ansprüche,
**dadurch gekennzeichnet,**
daß die Seitenbogengelenkkette (6) an Gelenkstellen miteinander verbundene Kettenglieder umfaßt, daß jede Gelenkstelle einen Gelenkbolzen (12) und eine Gelenkhülse (14) umfaßt, und daß die Seitenbogengelenkkette (6) und die Laschenkette (25, 26) so zueinander angeordnet sind, daß zumindest eine für ein ausreichendes Abstützen erforderliche Anzahl an Gelenkbolzen (12) der Seitenbogengelenkkette (6) auf der Abstützfläche (34) der Abstützbügel (31) der Laschenkette (25, 26) aufsitzt.

6. Abstützvorrichtung nach einem der vorangegangenen Ansprüche,
**dadurch gekennzeichnet,**
daß jeder Gelenkbolzen (12) der Seitenbogengelenkkette (6) auf einer Abstützfläche (34) eines Abstützbügels (31) der Laschenkette (25, 26) aufsitzt.

7. Abstützvorrichtung nach einem der vorangegangenen Ansprüche,
**dadurch gekennzeichnet,**
daß die Gelenkbolzenachsen (G) der Seitenbogengelenkkette (6) quer zu den Gelenkbolzenachsen (A) der abstützenden Laschenkette (25, 26) ausgerichtet sind.

8. Abstützvorrichtung nach einem der vorangegangenen Ansprüche,
**dadurch gekennzeichnet,**
daß die Gelenkbolzenachsen (G) der Seitenbogengelenkkette (6) im wesentlichen senkrecht zu den Gelenkbolzenachsen (A) der abstützenden Laschenketten (25, 26) ausgerichtet sind.

9. Abstützvorrichtung nach einem der vorangegangenen Ansprüche,
**dadurch gekennzeichnet,**
daß die U-Schenkel (32) des Abstützbügels (31) im wesentlichen senkrecht zur Gelenkbolzenachse (A) der Laschenkette (25, 26) angeordnet sind und jeweils die U-Schenkel (32) eines Abstützbügels (31) an zwei benachbarten Gelenkbolzen (28) befestigt sind,
daß der U-Steg (33) jedes Abstützbügels (31) mit der Abstützfläche (34) im wesentlichen zu den Gelenkbolzenachsen (A) angeordnet ist und daß die Gelenkbolzen (12) der Seitenbogengelenkkette (6) sich mit ihrer auf der Innenseite des Kettenbogens angeordneten Stirnseite (36) auf der Abstützfläche (34) abstützen.

10. Abstützvorrichtung nach einem der vorangegangenen Ansprüche,
**dadurch gekennzeichnet,**
daß die abstützende Laschenkette (25, 26) auf ihren Gelenkhülsen drehbar angeordnete Laufrollen (30) aufweist, daß als Führungseinrichtung eine dem Kettenbogen angepaßte Führungsschiene (37) mit einer Führungsfläche (38) vorgesehen ist und daß die Laschenketten (25, 26) und die Führungsschiene (37) derart angeordnet sind, daß die Laufrollen (30) sich auf der Führungsfläche (38) abstützen und auf dieser entlangrollbar sind.

11. Abstützvorrichtung nach einem der vorangegangenen Ansprüche,
**dadurch gekennzeichnet,**
daß die Führungsfläche (38) parallel zu den Gelenkbolzenachsen (A) der Laschenkette (25, 26) ausgerichtet ist und eine Breite aufweist, die kleiner ist als der kleinste Abstand von zwei parallel einander gegenüberliegenden Laschen (29) der Laschenkette (25, 26).

12. Abstützvorrichtung nach einem der vorangegangenen Ansprüche,
**dadurch gekennzeichnet,**
daß die Seitenbogengelenkkette (6) eine Stauförderkette ist, die in einem Führungsschienenaufbau (3) geführt ist und die auf Führungsflächen (9, 10) des Führungsschienenaufbaus (3) abrollende Laufrollen (16) umfaßt.

13. Abstützvorrichtung nach einem der vorangegangenen Ansprüche,
**dadurch gekennzeichnet,**
daß in den Führungsschienenaufbau (3) der fördernde Oberzug (7) und der rücklaufende Unterzug (8) der Seitenbogengelenkkette (6) angeordnet sind und daß dem Oberzug (7) ein erstes Abstützelement (25) und dem Unterzug (8) ein zweites Abstützelement (26) zugeordnet ist.

14. Abstützvorrichtung nach einem der vorangegangenen Ansprüche,
**dadurch gekennzeichnet,**
daß Führungselemente (41, 42) vorgesehen sind, die den rücklaufenden Leerzug (39, 40) des Abstützelementes (25, 26) in zumindest eine angenäherte Bogenform drücken, so daß die Breite des Abstützelementes (25, 26) gering ist.

15. Förderbahn mit mindestens zwei parallel zueinander angeordneten Seitenbogengelenkketten (6), die zumindest einen Förderbogen (19) aufweist und mit einer im Bereich des Förderbogens (19) jeweils einer Seitenbogengelenkkette (6) zugeordneten und diese umfassenden Abstützvorrichtung nach einem der vorangegangenen Ansprüche.
